# EUROPEAN PATENT APPLICATION

(11) **EP 2 369 538 A1**
(43) Date of publication of application: **28.09.2011**
(21) Application number: 11158083.3
(22) Date of filing: 14.03.2011
(51) Int. Cl.: G06Q 10/00, G06Q 50/00

(54) **Technique for aggregating reactive power loads**

(30) Priority: 26.03.2010 US 732545
(71) Applicant: Palo Alto Research Center Incorporated, Palo Alto, California 94304 (US)
(72) Inventor: Uckun, Serdar, Palo Alto, CA 94306 (US)
(74) Representative: Skone James, Robert Edmund

(57) **Abstract**

One embodiment of the present invention provides a system that aggregates an energy service from one or more participants (114). An aggregator (112) in the system first sends a plurality of price points to a respective participant, wherein each price point corresponds to a particular range of phase angles between a voltage waveform and a current waveform. The aggregator (112) then receives a price point selected by the participant, wherein the selected price point corresponds to a phase angle to which the participant agrees to adj ust. Next, the aggregator (112) aggregates from the one or more participants an energy service with reactive-power reduction.

## Description

The present disclosure relates to techniques for aggregating one or more participants in an electric power system in order to provide an energy service. More specifically, the present disclosure relates to managing reactive power for one or more participants in order to provide more reliable aggregated energy services.

### Related Art

With the deregulation of electricity markets and the increased integration of communication and control technology in power systems, it is increasingly attractive for flexible electricity consumers (such as individual residences, as well as small- and medium-sized businesses, which are henceforth collectively referred to as "participants") to supply energy services to an energy provider, e.g., an independent system operator (ISO). For example, residential consumers of electricity can, in principle, provide ancillary services by shifting their consumption of electricity relative to their baseline consumption patterns. Because of the relatively small power needs of these residences and small businesses, aggregators in the power system often want to combine and coordinate the supply and/or demand of multiple participants in order to aggregate sufficient energy service to meet the needs of the ISO.

However, the participants may not be able to offer the same quality of service that an aggregator needs to provide to the ISO. For instance, the participants may not be able to guarantee a stable reduction in power demand for a predetermined period of time. Furthermore, the participants may not wish to be exposed to the full risks of trading in a volatile energy spot market. As a consequence, it may not be practical for the participants to interact with an aggregator using the same mechanism that the aggregator uses to interact with the ISO. For example, it may not be reasonable to expect that a participant bid up to 24 hours in advance of a desired service, such as a power reduction or being on standby for power reduction (which is the demand side equivalent to spinning reserve). Typically, residential customers or small businesses are not able to predict their load 24 hours in advance. Consequently, they may not be willing to commit to a future reduction with high reliability.

In addition to the increased risk associated with the different time scales between when an ISO requests bids and when participants may be willing to offer changes in supply or demand, it may be difficult to optimize the decisions of the aggregator and the distributed participants. For example, participants may need to balance the impact of reduced demand with the commensurate economic reward. Similarly, the aggregator may need to balance the price offered by the ISO for a desired service versus the fees paid to the participants. However, it can be difficult for the aggregator and the participants to perform these optimizations without information about the consequences of their decisions for counterparties.

In alternating current (AC) power systems, energy storage elements such as inductance and capacitance introduce periodic reversals of the direction of energy flow. The real power is the portion of power flow that results in the net transfer of energy in one direction. The portion of power flow, which returns to the source in each cycle due to stored energy, is known as reactive power. The amount of reactive power in an AC power system is determined by the phase angle between the voltage waveform and the current waveform. In an ideal case, voltage is perfectly synchronized with current, the reactive power would be zero, and all power is real. At the other extreme, if there is a 90-degree phase shift between voltage and current, real power is zero and all power is reactive. Lower reactive power demand results in more efficient energy services. While there are demand-response systems in practice today, these demand-response systems only manage real power. There is currently no demand-response system that takes into account the reactive power in the network.

Hence, what is needed is a method and a system that facilitates aggregation of the energy service while minimizing reactive power in the network.

One embodiment provides a system that aggregates an energy service from one or more participants. An aggregator in the system first sends a plurality of price points to a respective participant, wherein each price point corresponds to a particular range of phase angles between a voltage waveform and a current waveform. The aggregator then receives a price point selected by the participant, wherein the selected price point corresponds to a phase angle to which the participant agrees to adjust. Next, the aggregator aggregates from the one or more participants an energy service with desired reactive power reduction.

In some embodiments, the system further determines the price point based on a power factor in the power system, wherein the power factor is the ratio between real power and the absolute value of the complex power.

In some embodiments, the system further calculates a contribution by a load of the participant to the desired average amount of the energy service based at least on the price points offered for the energy service and a reactive power level of the load. After the calculation, the purchase price is fixed for the participant, who is obliged to provide a corresponding portion of the desired amount of the energy service

In some embodiments, the plurality of price points sent to the participant is one of: a vector, a matrix, a list, a table, or a function that includes a series of prices associated with the desired phase angles or phase angle changes.

In some embodiments, the system further couples the energy service with other power sources, other power loads, or other reactive power management schemes.
FIG. 1 is a block diagram illustrating a power aggregation system in accordance with an embodiment of the present invention.
FIG. 2A is a diagram illustrating the relationship between real power, reactive power, and complex power in accordance with an embodiment of the present invention.
FIG. 2B presents exemplary voltage (denoted as *v(t)*) and current (denoted as *i(t)*) waveforms in a power system with capacitive loads.
FIG. 2C presents exemplary voltage (denoted as *v(t)*) and current (denoted as *i(t)*) waveforms in a power system with inductive loads.
FIG. 3A illustrates a price vector in accordance with an embodiment of the present invention.
FIG. 3B illustrates a price matrix in accordance with an embodiment of the present invention.
FIG. 4 is a block diagram illustrating a computer system for facilitating reactive power demand response in accordance with an embodiment of the present invention.
FIG. 5 is a block diagram illustrating a data structure for facilitating reactive power demand response in accordance with an embodiment of the present invention.
FIG. 6 is a flow chart illustrating a process for aggregating reactive power loads in accordance with an embodiment of the present invention.

Note that like reference numerals refer to corresponding parts throughout the drawings.

Embodiments of the present invention provide an energy-service aggregation system that provides users different price-based incentives based on reactive power demand in the power network. This aggregation may be performed by an aggregator, which operates as a liaison between the participants and the power-system operator. In particular, the aggregator uses an embedded demand-response mechanism to manage the reactive power by offering a plurality of price points at any given time. The variable price points are dependent on the current phase difference between voltage and current in the power system. This aggregation technique provides incentives to minimize reactive power loads based on the ability of appliances to adjust the voltage-current phase difference by turning off reactive devices. By reducing reactive power from one or more participants, the demand-response mechanism in the aggregator facilitates more efficient aggregated energy services.

In addition, this aggregation technique can increase economy of scale (such as that offered by larger energy providers) and improve quality and reliability of service (e.g., the ability to provide desired amount of the energy to the power-system operator).

In the present disclosure, "energy services" refers broadly to: a demand response in which at least some of the participants agree to reduce their energy demand; the generation of power by at least some of the participants; and/or ancillary services that include energy load, supply, or both. Moreover, values of power supply or load can be positive or negative. Note that a negative demand response (*i.e*., a decrease in demand) is equivalent to positive power generation. Similarly, a positive demand response *(i.e.,* an increase in demand) is equivalent to negative power generation.

In a power system, an ISO may use energy services to dynamically match overall supply and load. Typically, an ISO predicts the energy load, and uses optimization and market mechanisms to arrange the required primary and ancillary services to successfully operate the power system.

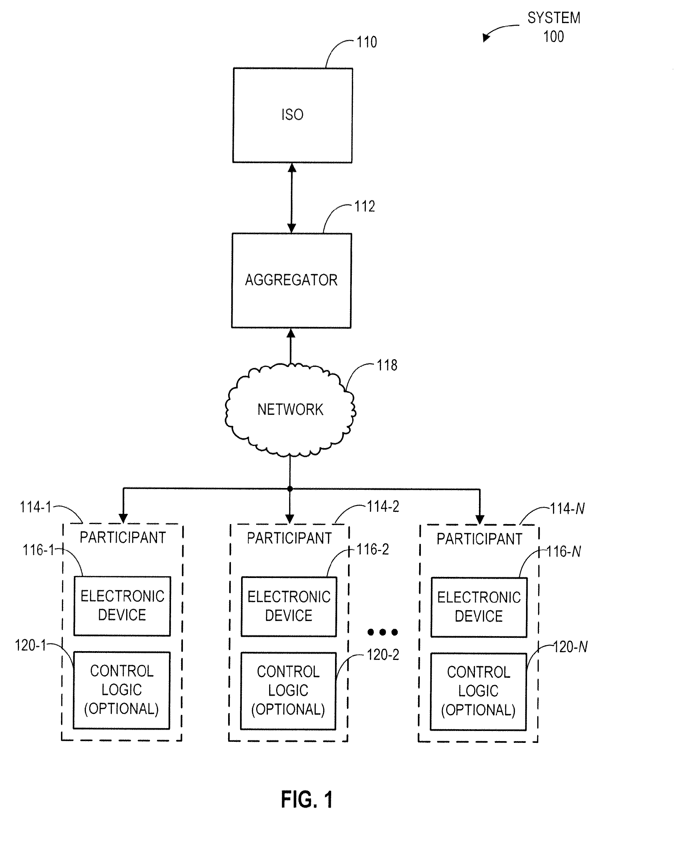

In existing approaches, the providers of energy services are often large power plants or, for demand response, large industrial loads. However, with the advent of small renewable resources, and the possibility that participants (such as homes and small businesses) can provide power and/or demand response, there is an opportunity to aggregate small and typically low-quality energy services from multiple participants into larger and better-quality energy services for the power system. As shown in FIG. 1, an aggregation system 100 can be implemented by an aggregator 112, who may be a utility company or a third party. Aggregator 112 may reside at one or more locations in system 100 (thus, the function of aggregator 112 may be distributed in system 100). Aggregator 112 is collects or receives energy-related information using from electronic devices 116 residing with participants 114. After the energy service is aggregated, aggregator 112 may sell it directly to ISO 110, couple it with other energy sources (such as wind-generated) to improve the overall service quality in the power system, and/or combine it with other loads to reduce the overall energy cost.

However, there can be problems associated with aggregating low-quality energy services to provide high-quality energy services. In particular, it can be difficult and expensive to manage reactive power in low-quality energy services to create high-quality aggregate energy services.

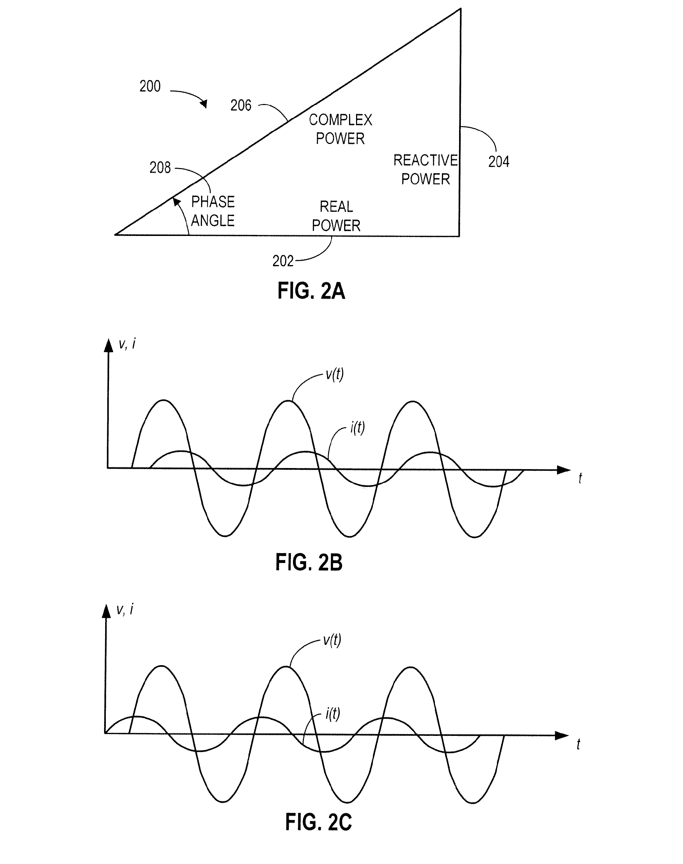

FIG. 2A presents a diagram illustrating the relation between real power and reactive power in a power-vector triangle 200. Real power value 202 and reactive power value 204 form the two legs of the triangle. The longest side 206 represents the complex power. A phase angle 208 indicates the phase difference between the voltage and current and determines the relationship between real power 202 and reactive power 206. The ratio between real power and apparent (total) power is called the power factor, wherein the apparent power is the absolute value of complex power 206. The power factor equals 1 when the phase angle is zero, and is zero when the phase angle is 90 degrees. Apparently, if real power 202 is fixed, a power system with a higher power factor produces lower reactive power, thus lower circulating currents and higher transmission efficiency.

Reactive power is usually caused by the practical characteristic of loads. Capacitive loads cause the current waveform to lead the voltage waveform (see the exemplary voltage and current waveforms illustrated in FIG. 2B), whereas inductive loads cause the current waveform to lag behind the voltage waveform (see the exemplary voltage and current waveforms illustrated in FIG. 2C). To gain a power factor as close to 1.0 as possible, power companies strive to reduce the amount of reactive power in power transmission and distribution by switching large banks of inductors and capacitors in and out as necessary.

In general, a fast-acting and accurate embedded economic demand-response mechanism is used to help mediate between aggregator 112 and participants 114. Each participant is managed by an electronic device 116. In some embodiments, aggregator 112 may provide an initial probe price to participants 114, for example, via a network 118 (such as the Internet) and electronic devices 116. In response, a given participant (such as participant 114-1) may provide an approximation to a supply function (which is sometimes referred to as a 'supply-function approximation'). For example, the supply function may include a relation between the supply (or demand) as a function of the price of the energy service, and a given supply-function approximation may approximate the overall supply function in proximity to the probe price. Using the supply-function approximations from participants 114, aggregator 112 can calculate a purchase price necessary to aggregate and provide the desired energy service for ISO 110. Moreover, by exchanging information in this way, aggregator 112 and at least a subset of participants 114 may rapidly converge on a solution. Consequently, this aggregation technique may facilitate improved aggregate energy services and better performance of the power system.

In some embodiments, participants 114 select current supply-function approximations from a set of predetermined functions. For example, electronic devices 116 at participant locations may include buttons or icons on a display corresponding to the predetermined functions, and participants 114 may select current supply-function approximations by pressing the buttons or activating the icons. Then, electronic devices 116 may communicate the selected current supply-function approximations to aggregator 112 using network 118. In further embodiments, the selection process can be automated without requiring user's manual input. The user can provide a high-level preference configuration that allows the system to automatically select the desired current supply-function approximation.

Once a final purchase price is calculated for a current time interval, there is a binding agreement between aggregator 112 and at least a subset of participants 114, each of whom agrees to provide at least a portion of the aggregate energy service. This binding agreement may include restrictions or responsibilities on subsequent actions of participants in at least the particular subset. Thus, these participants may be obliged to adjust their demand response in exchange for compensation at the fixed final purchase price.

The demand-response mechanism facilitates reduction in total power load by setting variable price points in the supply-function approximation. However, there is no direct measurement or manipulation of the reactive power or the power factor in the existing demand-response mechanism. This disadvantage may cause degradation in the power factor, for example when a large number of electric motors, which are inductive loads, are turned off as a result of demand-response events.

Embodiments of the present invention facilitate management of reactive power as well as total power in the demand-response framework. At any given time, instead of broadcasting a single price signal, the reactive demand-response system broadcasts a plurality ofprice signals. Each price signal corresponds to a respective phase angle between the voltage waveform and the current waveform for a participant 114. For example, if the current waveform is lagging behind the voltage waveform for a participant, the reactive demand-response system offers a price value corresponding to a larger incentive for inductive loads to turn off. At the same time, the reactive demand-response system may offer lower price incentives or no incentives for capacitive loads to go offline. Upon receiving the plurality of price signals, each control logic 120 in participants 114 determines which components in the load should be turned off in order to maximize their economic gain and to provide the desired real and reactive power reduction for the aggregator.

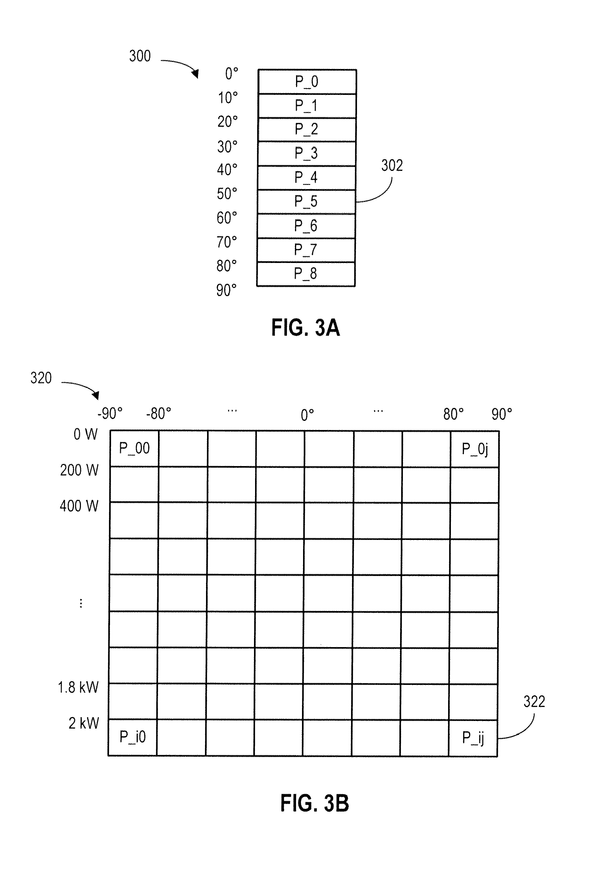

The plurality of price signals may be implemented in various ways. In one embodiment, the price signals are broadcast as a one-dimensional array (vector) of prices, in which each price corresponds to a particular range of phase angles. FIG. 3A illustrates such a price vector 300. For example, an element 302 in vector 300 with price value of P_5 corresponds to a range of phase angles between 50 degrees to 60 degrees. In another embodiment, the price signals are broadcast as a two-dimensional array (matrix) of prices wherein a given price value's row position corresponds to a value or range ofreactive power and the price value's column position corresponds to a value or range of phase angles. FIG. 3B illustrates such a price matrix 320. An element 322 in matrix 320 with price value of P_ij corresponds to a range of phase angles between 80 degrees and 90 degrees and a range of reactive power of over 2 kW. In yet another embodiment, the price signals are broadcast in a linear or non-linear function, and each control logic 120 may compute its rewards by plugging in the current phase angle and the real and reactive power reductions it is able to offer to the aggregator 112.

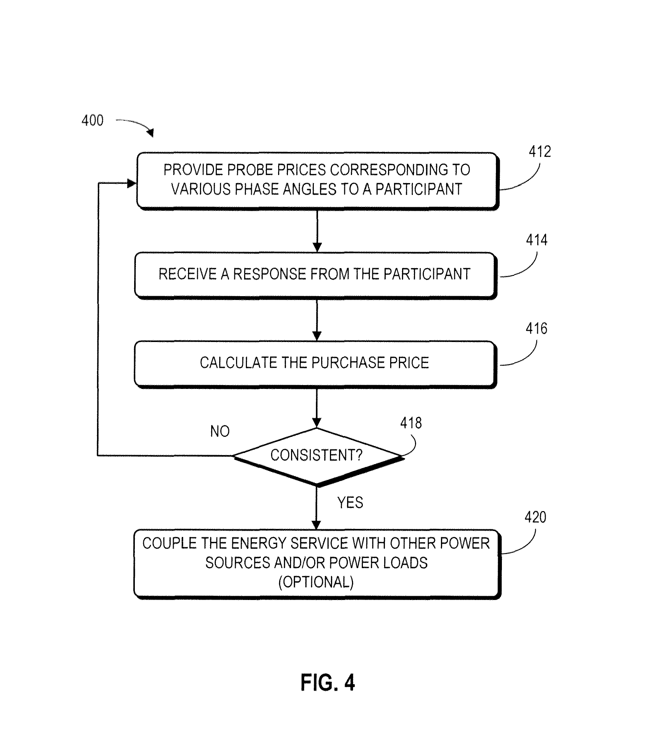

FIG. 4 presents a flow chart illustrating a process 400 for providing price points to reactive power loads, which may be performed by a computer system (for example, a computer system that is operated by aggregator 112 in FIG. 1). During operation, the system provides initial probe prices corresponding to various phase angles for an energy service to a participant (operation 412). Then, the system receives a response from the participant (operation 414), where the response corresponds to a price dependent on the current phase angle and the real and reactive power reductions the participant is able to offer. Next, the system calculates a purchase price with respect to the participant for the energy service the participant can provide based on the received response (operation 416). If the purchase price is not consistent with the probe price (operation 418) (for example, if it is out of the range of the probe prices), the process of providing the probe prices (operation 412) (*i.e.,* upgrading the probe price), receiving the response (operation 414), and re-calculating the purchase price (operation 416) may be iteratively repeated until the purchase price converges to a stable value. The system can further determine whether the purchase price is sufficiently close to the probe price, and/or whether the purchase price meets the restrictions participants included with their response. Note that the purchase price may be a minimum price in a range of prices. Additionally, once the system has settled its transactions with the participants, the system may optionally couple the energy service with other power sources, other power loads, or other reactive power management schemes (operation 420). Note that process 400 may include additional or fewer operations. The order of the operations may be changed and two or more operations may be combined into a single operation.

In an exemplary embodiment, the desired energy service is a demand response, and for simplicity we assume that aggregator 112 wants to elicit an immediate demand reduction. Aggregator 112 may set initial probe prices estimated to elicit the desired aggregate power factor. In response, each of participants 114 may provide a response proximate to this initial probe price that specifies the amount of reactive and/or real demand response that participants 114 will deliver for this price. Then, aggregator 112 may calculate an updated purchase price based on the response received from participants 114. If the total reactive demand reduction meets the needs of aggregator 112, and is consistent with the responses from a subset of participants, then the updated price becomes the settlement or purchase price that is used for the demand reduction from at least a subset of participants 114. Otherwise, aggregator 112 may suggest new estimated probe prices to participants 114, and the process may be optionally iteratively repeated one or more times until aggregator 112 obtains a suitable price.

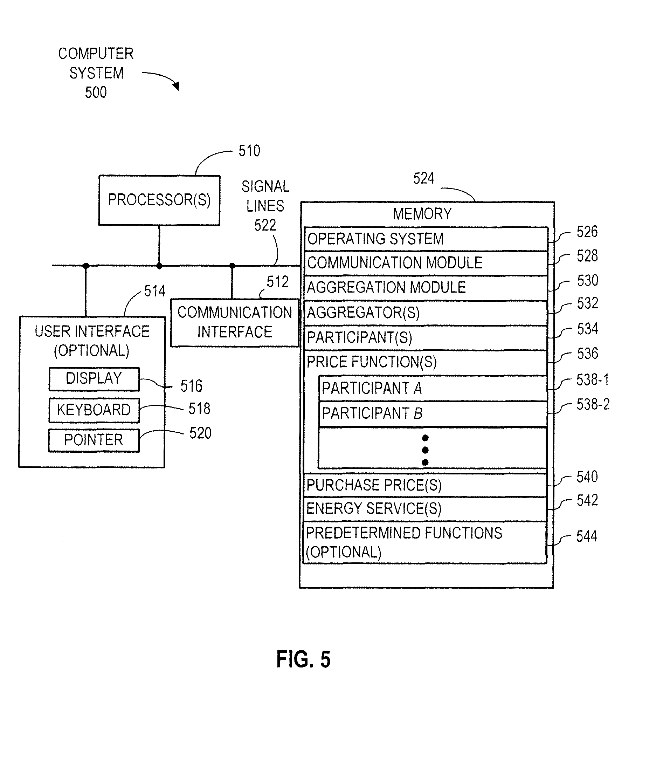

FIG. 5 presents a block diagram illustrating a computer system 500 for facilitating reactive power demand response. Computer system 500 includes: one or more processors 510, a communication interface 512, an optional user interface 514, and one or more signal lines 522 coupling these components together. Moreover, the optional user interface 514 may include: a display 516, a keyboard 518, and/or a pointer 520, such as a mouse.

Memory 524 in the computer system 500 may include volatile memory and/or nonvolatile memory. Memory 524 may store an operating system 526 and communication procedures in a communication module 528. Memory 524 may also include multiple program modules including aggregation module 530. Aggregation module 530 may aggregate the energy services from participants 534 on behalf of aggregators 532 to provide aggregate energy services 542. In particular, aggregation module 530 may provide probe prices, and may receive price functions 536 from participants 534, such as a response 538-1 from participant *A* or a response 538-2 from participant B. In some embodiments, participants 534 select a price function based an the probe price in a given time interval from an optional set of predetermined functions 544.

Then, aggregation module 530 may use the selected price function to calculate one or more purchase prices 540 in the given time interval or in a sequence of time intervals. If necessary, aggregation module 530 may repeatedly iterate this aggregation process until at least one of purchase prices 540 converges with the probe price.

Although computer system 500 is illustrated as having a number of discrete items, FIG. 5 is intended to be a functional description of the various features that may be present in computer system 500 rather than a structural schematic of the embodiments described herein. In practice, and as recognized by those of ordinary skill in the art, the functions of the computer system 500 may be distributed over a large number of devices or computers, with various groups of the devices or computers performing particular subsets of the functions. In some embodiments, some or all of the functionality of computer system 500 may be implemented in one or more application-specific integrated circuits (ASICs) or field-programmable gate arrays (FPGAs).

In some embodiments, system 100 and/or computer system 500 include fewer or additional components. Moreover, two or more components may be combined into a single component and/or a position of one or more components may be changed. Moreover, the functionality of system 100 and/or computer system 500 may be implemented more in hardware and less in software, or less in hardware and more in software, as is known in the art.

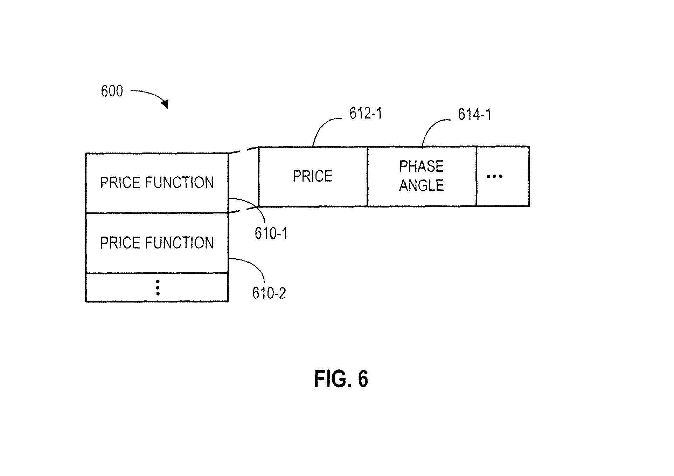

FIG. 6 presents a block diagram illustrating a data structure 600 for facilitating reactive power demand response. This data structure contains a plurality of price functions 610 for one or more participants. For example, price function 610-1 includes one or more pairs of price and corresponding phase angle, such as price 612-1 and phase angle 614-1.

In some embodiments, data structure 600 includes fewer or additional components. Moreover, two or more components may be combined into a single component and/or a position of one or more components may be changed.

The above description is presented to enable any person skilled in the art to make and use the disclosure, and is provided in the context of a particular application and its requirements. Various modifications to the disclosed embodiments will be readily apparent to those skilled in the art, and the general principles defined herein may be applied to other embodiments and applications without departing from the spirit and scope of the present disclosure. Thus, the present disclosure is not intended to be limited to the embodiments shown, but is to be accorded the widest scope consistent with the principles and features disclosed herein.

While the preceding embodiments illustrate the use of the aggregation technique to provide an aggregate energy service, in other embodiments this technique may be used in a wide variety of problems to provide a market-based mechanism or economic exchange to rapidly determine a local equilibrium between price and supply among numerous distinct organizations or individuals.

## Claims

1. A method for aggregating an energy service from one or more participants, comprising:
sending, by an aggregator, a plurality of price points to a respective participant, wherein each price point corresponds to a particular range of phase angles between a voltage waveform and a current waveform;
receiving, at the aggregator, a price point selected by the participant, wherein the selected price point corresponds to a phase angle to which the participant agrees to adjust; and
aggregating from the one or more participants an energy service with reactive-power reduction.

2. The method of claim 1, further comprising determining the price point based on a power factor in the power system.

3. The method of claim 1 or claim 2, further comprising calculating a contribution by a load of the participant to the desired average amount of the energy service based at least on the price points offered for the energy service and a reactive power level of the load.

4. The method of claim 3, wherein, after the calculation, the purchase price is fixed for the participant, who is obliged to provide a corresponding portion of the desired amount of the energy service.

5. The method of any of the preceding claims, wherein the plurality of price points sent to the participant is one of: a vector, a matrix, a list, a table, or a function that includes a series of prices associated with the desired phase angles or phase angle changes.

6. The method of any of the preceding claims, further comprising coupling the energy service with other power sources, other power loads, or other reactive power management schemes.

7. A computer-readable storage medium storing instructions that when executed by a computer cause the computer to perform a method for aggregating an energy service from one or more participants, the method comprising:
sending, by an aggregator, a plurality of price points to a respective participant, wherein each price point corresponds to a particular range of phase angles between a voltage waveform and a current waveform;
receiving, at the aggregator, a price point selected by the participant, wherein the selected price point corresponds to a phase angle to which the participant agrees to adjust; and
aggregating from the one or more participants an energy service with reactive-power reduction.

8. The computer-readable storage medium of claim 7, storing instructions that when executed by a computer cause the computer to perform a method according to any of claims 1 to 6.

9. A system for aggregating an energy service from one or more participants, comprising:
a sending mechanism configure to send a plurality of price points to a respective participant, wherein each price point corresponds to a particular range of phase angles between a voltage waveform and a current waveform;
a receiving mechanism configured to receive a price point selected by the participant, wherein the selected price point corresponds to a phase angle to which the participant agrees to adjust; and
an aggregation mechanism configured to aggregate from the one or more participants an energy service with reactive-power reduction..

10. The system of claim 9, further comprising a determination mechanism configured to determine the price point based on a power factor in the power system.

11. The system of claim 9 or claim 10, further comprising a calculation mechanism configured to calculate a contribution by a load of the participant to the desired average amount of the energy service based at least on the price points offered for the energy service and a reactive power level of the load.

12. The system of claim 11, wherein, after the calculation, the purchase price is fixed for the participant, who is obliged to provide a corresponding portion of the desired amount of the energy service.

13. The system of any of claims 9 to 12, wherein the plurality of price points sent to the participant is one of: a vector, a matrix, a list, a table, or a function that includes a series of prices associated with the desired phase angles or phase angle changes.

14. The system of any of claims 9 to 13, further comprising a coupling mechanism configured to couple the energy service with other power sources, other power loads, or other reactive power management schemes.
